**Europäisches Patentamt**

**European Patent Office**

**Office européen des brevets**

(11) Publication number: **0 068 784**
A2

# EUROPEAN PATENT APPLICATION

(21) Application number: **82303229.7**

(22) Date of filing: **21.06.82**

(51) Int. Cl.³: **B 29 J 1/00,** E 04 C 2/26,
**B 29 D 3/02**

(30) Priority: **19.06.81 ZA 814159**

(43) Date of publication of application: **05.01.83**
**Bulletin 83/1**

(84) Designated Contracting States: **AT CH DE FR GB IT LI SE**

(71) Applicant: **FORMULA SEVEN (PROPRIETARY) LIMITED, Parin Road Parow Industrial Estate, Parow Cape Province (ZA)**

(72) Inventor: **Courtney, Wyndham James, 30 Mount Nelson Road Sea Point, Cape Town Cape Province (ZA)**

(74) Representative: **Pennant, Pyers et al, Stevens, Hewlett & Perkins 5 Quality Court Chancery Lane, London, WC2A 1HZ (GB)**

(54) **Method of producing components for use in building.**

(57) A method of manufacturing a building panel using a resin matrix, foamed synthetic plastics or other material for thermal insulation and asbestos or gypsum boards is disclosed. The panel is built-up by placing a glass fibre mat (12) into a mould which has previously had a gellcoat, a release agent and adhesive applied thereto. A first board (32) is then placed in the mould onto the adhesive. Strips (16) of thermally insulating material are then placed onto the board and the gaps between the strips and around the strips filled with matrix. The second board (34) and a layer (20) of matrix are then sequentially placed in the mould. Decorative chippings (26) are then applied to the layer (20). Details of the matrix are disclosed. Also disclosed is a construction including a foundation on which there is an upstanding rail. The panel has a groove in its lower edge for receiving the rail. The boards (32, 34) are omitted from another construction which is disclosed.

# METHOD OF PRODUCING COMPONENTS FOR USE IN BUILDING

THIS INVENTION relates to a method of producing components for use in building.

According to the present invention there is provided a method of producing a component for use in building which method comprises casting a matrix comprising a filled, low reactivity resin in a mould.

The resin is preferably an orthophthalic resin or an isophthalic polyester resin.

The mould can be gellcoated over a release agent before the resin is poured.

The matrix can include an organic or inorganic filler such as washed and dried silica sand. The filler can have a coarseness of up to 140 mesh (British Standard), and preferably a coarseness of between 60 and 90 mesh.

The matrix can have the following constituents by weight;

    100 parts resin
    up to 25 parts of a monomer diluent;
    100 - 600 parts filler, preferably 400
parts;
    0,25 to 3 parts initiator.

The initiator is preferably methyl ethyl ketone peroxide.

The matrix can also include;
up to 0,25 parts by weight dimethylaniline;
up to 30 parts by weight of a powdered filler such as industrial talc with a fineness of approximately 200 mesh, this fine filler being in addition to the 100 - 600 parts of coarser filler.

The monomer is preferably styrene monomer.

The resin is preferably preaccelerated with up to 6% by weight cobalt naphthenate or cobalt octoate.

An example of a method of producing a building panel will now be described in detail.

The building panel is produced in a mould of suitable area and depth. To the inwardly directed vertical faces and to the inner horizontal face of the mould a release agent is applied thereby to enable the panel readily to be removed after fabrication. The release agent can be a paraffinic based wax that is silicone free or can be based on polyvinyl alcohol. Alternatively, a mixture of polyvinyl alcohol and paraffinic based waxes may be used as a release agent.

If a wax based release agent is used, then this is polished to give it a reasonable shine and if a polyvinyl alcohol is used, this is allowed to dry to the point where it feels dry to the touch.

A gellcoat is catalysed with 1 to 2% methyl ethyl ketone peroxide initiator and painted, using a brush, over the release agent on the vertical and horizontal mould surfaces. The gellcoat, which will normally be pigmented white, cures to a tacky surface within about twenty minutes. A glass fibre mat is then placed into the mould to cover the gellcoat on the horizontal mould surface. The mat is then 'wet-out' with a general purpose resin which has been catalyzed with 1 to 2 percent methyl ethyl ketone peroxide just prior to application. 'Wetting-out' means the application of the resin to the fibre glass and then, by using a metal or sheepskin roller, rolling the resin so as completely to impregnate or wet the glass fibre mat and remove all entrapped air.

Preferably the mat is of the chopped strand type and will normally be of 300 or 450 gram weight per square metre. Optionally, however, a mat of 600 gram weight per square metre mat can be used.

The glass fibre mat with the resin thereon is allowed to cure until it ceases to be tacky. This takes about twenty minutes, the exact time depending on temperature conditions.

A matrix is then made up using a low reactivity preaccelerated orthophthalic resin or a low reactivity preaccelerated isophthalic polyester resin. A suitable matrix has the following constituents by weight;

100 parts of low reactivity preaccelerated orthophthalic or ispophthalic resin;

10 parts styrene monomer as a diluent;

400 parts by weight of washed and dried silica sand with a coarseness of between 60 and 90 mesh (British Standard)

1 to 2 parts by weight methyl ethyl ketone peroxide initiator.

The matrix is poured onto the resin impregnated glass fibre mat which is in the mould to a depth of 2 mm to 15 mm. The preferred depth is 5 mm. Subsequently the matrix is screeded to give an even thickness throughout. The diluent facilitates screeding as it makes the matrix less viscous. The matrix is then allowed to cure, curing taking thirty to forty minutes depending on prevailing temperature conditions.

Dividing ribs of polyurethane or phenolformaldhyde foam are then adhered to the matrix layer using a general purpose filled or unfilled resin catalyzed with 1 to 2 percent methyl ethyl ketone peroxide. The gaps or voids between the polyurethane ribs are between 2 mm and 100 mm wide and the number depends on the width of the panel that is being produced. Normally, the ribs will be parallel to one another but it is possible for the ribs to be in an intersecting pattern.

The polyurethane foam is of the 'hard' type which does not compress readily under pressure.

The gaps between the parallel ribs, or the spaces between the intersecting ribs, are filled with the matrix described above to a level co-planar with upper faces of the ribs. The matrix is allowed to cure, this normally taking about thirty minutes.

A further amount of the matrix is then poured onto the partially completed panel to a thickness of between 2 mm and 15 mm (preferably 10 mm) thus totally embedding the ribs, screeded and allowed to cure. Curing time is again between thirty and forty minutes. The next step is to place a glass fibre mat of, for example, 300 gram per square metre weight onto the cured matrix and wet this out with a general purpose resin which is subsequently allowed to cure. To increase the thickness of the panel, a further layer of matrix, then another mat then another layer of matrix etc can be provided. The complete moulding is removed from the mould and allowed to cure for one to two days on a flat drying rack. Again, the time allowed for curing depends on prevailing temperature conditions.

The final stage of the procedure is the addition of a decorative finish to the non-gellcoated surface of the moulded panel. This is achieved by preparing a mixture of general purpose resin and filler (usually calcium carbonate whiting) mixed in the ratio of one part by weight resin to two parts by weight whiting and catalyzed with 1% methyl ethyl ketone peroxide initiator. This mixture is painted thickly onto the non-gellcoated surface of the panel and stone chippings are immediately dropped on. The chippings adhere to the tacky surface becoming partly embedded therein and adhering thereto. As soon as curing is complete, all loose chippings are brushed off the panel which is now ready for erection.

If desired the matrix can include substances which impart fire retarding or self-extinguishing properties thereto. For example, it can include a halogen such as a bromide or a chloride or can include antimony trioxide.  Also a substance having ultra violet blocking properties can be included.

For a better understanding of the present invention, and to show how the same may be carried into effect, reference will now be made, by way of example, to the accompanying drawing in which  :-

Figure 1 is a fragmentary, horizontal cross section through a wall panel produced according to the method of the present invention;

Figure 2 is a horizontal section, to a larger scale than Figure 1, through parts of two further panels, and

Figure 3 illustrates the mounting of a wall panel.

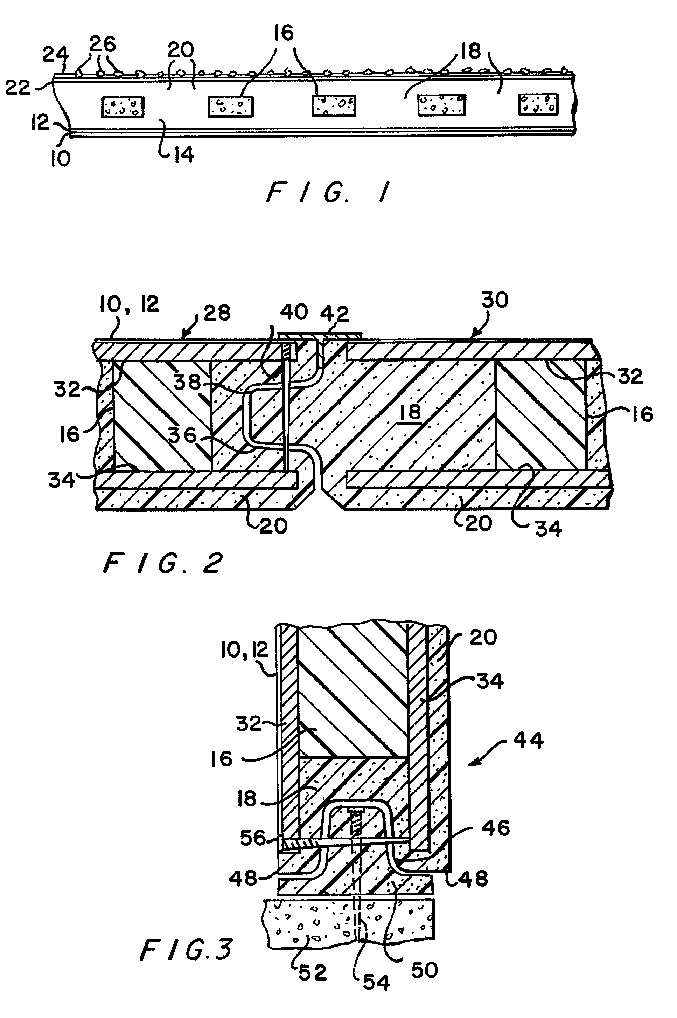

In Figure 1 of the drawing, reference numeral 10 designates the gellcoat adjacent which is the first glass fibre mat 12 placed in the mould. It should be noted that the layers are not drawn to scale.  Above the mat 12 is the first layer of matrix, designated 14, and the vertical ribs of polyurethane foam designated 16.  The matrix fill between the ribs 16 is referenced 18.  The second major layer of matrix is shown at 20 and this is surmounted by the glass fibre mat 22, the general purpose adhesive layer 24 and the stone chippings 26.

In Figure 2, the panels 28, 30 illustrated are similar to that illustrated in Figure 1 except in that two asbestos boards 32, 34 are incorporated
into each panel.  Each panel 28, 30 is produced by
the following method steps  :

1.  A mould is coated with a release agent.

2.  A gellcoat 10 is applied to the mould over
the release agent.

3.  A chopstrand fibreglass mat 12 is laid
over the gellcoat.

4.  The fibreglass mat is coated with
adhesive.

5.  The first asbestos board 32, which is
smaller than the mould, is pressed onto the
adhesive.

6.  Phenolformaldehyde foam (a rigid foam) is
placed in strips onto the board 32 to form the ribs
16.

7.  The spaces between and around the ribs are
then filled with matrix which is allowed partially
to cure.

8.  The second board 34 is placed onto the
ribs 16 and partially cured matrix.

9.  The board 34 is then covered with the
layer 20 of matrix.  It will be noted that the
matrix extends around the ends of the boards 32, 34
so that they are completely embedded.

10.  The chopstrand mat (not shown) is then
placed onto the layer 20. The mat can be pressed
into the layer 20.

11.  Finally, a layer of adhesive (not shown)
and the decorative chippings (not shown) are
applied.

12.  As an alternative to chippings, the mat 22
can be painted.

-8-

Instead of incorporating a gypsum or asbestos board, it is possible to make up a mixture of gypsum and vermiculite and pour it into the mould to obtain a fire resistant layer. Mixtures of sodium silicate with vermiculite and sodium silicate with perlite can also be used.

The panel 28 in Figure 2 has a groove 36 along that vertical edge thereof which is illustrated. The panel 30 has a corresponding tongue 38 which fits into the groove 36. Screws 40 are driven through the tongue 38 and those parts of the grooved panel which lie on each side of the tongue 38. A cover strip 42 of T-section covers the heads of the screws 40 and the joint between the panels. The 'upright' limb of the T-section cover strip 42 is pushed into the gap between the panels 28 and 30.

In Figure 3, the lower part of a panel 44 is shown. Where the parts shown correspond to those of Figures 1 and 2, like reference numerals have been used. The lower end of the panel 44 includes a downwardly open groove 46 flanked by tongues 48. A rail 50 is secured to a foundation 52 by means of a series of screws one of which is shown at 54. The rail 50 is cast using the matrix described herein and its profile is such that it fits the groove 46. Embedded in all faces of the rail 50 except the lower face is a chopstrand fibreglass mat. Screws 56 pass through the tongues 48 and rail 50 to secure the panel to the rail. Silicone sealant can be provided between the rail 50 and foundation 52, and between the rail 50 and the panel 44.

The matrix described can also be used to produce a simulated brick veneer. To acheive this a mould is used which has a series of rectangular depressions therein. The depressions are arranged in parallel rows, and the depressions in adjacent rows are staggered with respect to one another to simulate the pattern in which house bricks are laid. The base of each depression is roughened, and the depressions are separated from one another by raised ribs of rectangular cross-section.

In use, the matrix is poured into the depressions. The matrix is appropriately coloured to simulate brick and is poured in to a depth such that it almost completely fills the depressions.   .  Thereafter another matrix, which can be white or off-white, is poured in so that it extends across the ribs and joins the previously separate areas of brick-coloured matrix which were in the depressions. After curing, the resultant veneer is removed from the mould. It will be understood that, from the front of the veneer, horizontal and vertical strips of the off-white or white matrix can be seen between the coloured rectangular areas, these strips simulating the motar normally found between bricks in a conventionally built brick wall.

Suitable resins, release agents etc are commercially available from N.C.P. Resins Division of Cape Town under the following designations:-

| | |
|---|---|
| Orthophthalic resin | Polylite 32-111 |
| Isophthalic resin | Polylite 90-707 |
| Release agent (wax) | MR-3 |
| Release agent PVA | MR-5 |
| Gellcoat | 2022 |
| Gellcoat Initiator | HP91 |

CLAIMS

1. A method of producing a component for use in building which method comprises casting a matrix comprising a filled, low reactivity resin in a mould.

2. A method as claimed in claim 2, wherein the mould is gellcoated over a release agent before the resin is poured.

3. A method as claimed in claim 1 or 2, wherein the resin is an orthophthalic resin.

4. A method as claimed in claim 1 or 2, wherein the resin is an isophthalic polyester resin.

5. A method as claimed in any preceding claim, wherein the matrix includes an organic or inorganic filler.

6. A method as claimed in claim 5, wherein said filler is washed and dried silica sand. '

7. A method as claimed in any preceding claim, wherein the matrix has the following constituents by weight;

100 parts resin
up to 25 parts of a monomer diluent;
100 - 600 parts filler;
0,25 to 3 parts initiator.

8.      A method as claimed in claim 7, wherein the initiator is methyl ethyl ketone peroxide.

9.      A method as claimed in claim 7 or 8, wherein the matrix also includes;
          up to 0,25 parts by weight dimethylaniline;
          up to 30 parts by weight of a powdered filler such as industrial talc with a fineness of approximately 200 mesh, this fine filler being in addition to the 100 to 600 parts of coarser filler.

10.      A method as claimed in claim 7, 8 or 9 wherein said monomer diluent is styrene monomer.

11.      A method as claimed in any preceding claim, wherein the resin is preaccelerated.

12.      A method as claimed in claim 11, wherein the resin is preaccelerated with up to 6% by weight cobalt naphthenate or  cobalt octoate.

13.      A method as claimed in any preceding claim, and including the step of incorporating an asbestos board or gypsum board into the component which is in the form of a building panel.

14.      A method of producing a building panel as claimed in claim 13 and including coating the outer face of the panel and adhering stone chips to said layer.

15.      A method of producing a building panel as claimed in claim 13, and comprising securing a fibre glass mat to the outer face of the panel and

-12-

painting said mat.

16. A building panel produced according to the method defined in any preceding claim, and which includes a downwardly open groove along the lower edge thereof, the groove being bounded by elongate tongues.

17. A building construction comprising a foundation, a rail protruding upwardly from said foundation, and a panel as claimed in claim 16 standing with said rail entered in said groove.

18. A building construction as claimed in claim 17, and including fastening elements passing through at least one of said tongues and entering said rail to secure the panel to the rail.

F I G. I

F I G. 2

F I G. 3